# EUROPEAN PATENT SPECIFICATION

(11) **EP 2 067 664 B1**
(45) Date of publication and mention of the grant of the patent: **13.07.2011**
(21) Application number: 08008626.7
(22) Date of filing: 07.05.2008
(51) Int. Cl.: B60R 11/02, H04B 1/20

(54) **Display control device**
Anzeigesteuervorrichtung
Dispositif de contrôle d'affichage

(30) Priority: 05.12.2007 JP 2007314620
(43) Date of publication of application: 10.06.2009
(73) Proprietor: MITSUBISHI ELECTRIC CORPORATION, Chiyoda-ku Tokyo 100-8310 (JP)
(72) Inventor: Hiramatsu, Kouichi, Tokyo 100-8310 (JP); Tsushima, Naoyuki, Tokyo 100-8310 (JP)
(74) Representative: Pfenning, Meinig & Partner GbR

(56) References cited:
- EP-A- 1 552 985
- WO-A-01/10111
- JP-A- 2002 243 483
- JP-A- 2003 230 074
- US-A- 6 148 253
- US-A1- 2003 053 638
- US-A1- 2007 233 378

## Description

### BACKGROUND OF THE INVENTION

### Field of the Invention

The present invention relates to a display control device controlling respective display devices provided on a front seat and a rear seat of a vehicle.

### Description of the Related Art

Conventional display control devices include an on-vehicle display system where different images are displayed on a front-seat display for a front-seat occupant and on a rear-seat display for a rear-seat occupant, respectively, wherein a composite image is displayed on the front-seat display apparatus, on which a scaled-down image of a video displayed on the rear-seat display is superposed on the rear-seat display, and similarly a composite image is displayed on the rear-seat display, on which a scaled-down image of video displayed on the front-seat display is superposed on the rear-seat display, thus enabling the same image to be concurrently viewed on the front-seat and rear-seat displays (e.g. see Patent Document 1). Further, traditional display control devices are equipped with a control switch which is provided in a head unit operating vehicle-mounted apparatuses on the front seat and has a capability of switching control of a front-seat source and a rear-seat source, and which is also provided on the rear seat and has a capability of switching permission and non-permission from a rear controller, thus enabling control of the sound source of the rear seat and switching of the permission and non-permission from the rear controller by the head unit of the front seat (e.g. see Patent Document 2).
Patent Document 1: JP-A2003-230074
Patent Document 2: JP-A2003-089331

EP 1 552 985 A1 describes an in-vehicle equipment system having a front-mounted in-vehicle equipment with a hardware switch and with a display section and a rear-mounted in-vehicle equipment with a game controller, a display and a keyboard, which are connected to the front-mounted in-vehicle equipment.

US 6,148,253 A1 discloses an on-vehicle control system for controlling various apparatuses mounted on a vehicle. The system is preferably controlled by a rear server used by a rear-seat passenger. Only in case that no rear seat is occupied and the vehicle is stopped, the system can be operated by a front server.

In the conventional display control devices thus arranged as above where the same image can be viewed at the same time on both the front-seat display and the rear-seat display, and a front-seat occupant and a rear-seat occupant are allowed to freely operate an image displayed on the front-seat display and the rear-seat display. On that account, there is a problem that a confusion of operations is given rise to. Further, a design where the head unit provided on the front seat is equipped with a control selection switch is convenient for the front-seat occupant experienced in doing an operation to render operation assistance when the rear-seat occupant is an unfamiliar person with an operation or a child. However, the display control device cannot address a case where the rear-seat occupant does not want to receive operation assistance by the front-seat occupant, or a case where the front-seat occupant does not want to perpetrate an incorrect operation to the rear-seat occupant.

### SUMMARY OF THE INVENTION

The present invention has been made to solve the above-mentioned problems, and an object of the present invention is to provide a display control device where a confusion of operations does not result in between a front-seat occupant and a rear-seat occupant, which prevents commitment of an incorrect operation by a vehicle occupant.

The above-mentioned object of the present invention is solved by the display control device according to claim 1. Advantageous improvements are given by dependent claims.

The display control device according to the present invention is provided with a switch for selecting whether to permit or not to permit an operation in case of displaying a second display source on a second display by an operational instruction of a first input device, wherein only when the switch is set to an operable condition, display control of the second display source on the second display is carried out by the operational instruction of the first input device.

According to the present invention, since the display control device is arranged such that the display control device is provided with the switch for selecting whether to permit or not to permit an operation in case of displacing the second display source on the second display by the operational instruction of the first input device, and that only when the switch is set to an operable condition, the display control of the second display source on the second display is carried out by the operational instruction of the first input device, a confusion of operations does not give rise to between the front-seat occupant and the rear-seat occupant, which prevents perpetration of an incorrect operation by the vehicle occupant.

### BRIEF DESCRIPTION OF THE DRAWINGS

FIG. 1 is a block diagram of a display control device according to the first embodiment;
FIG. 2 is a view showing a state where the display control device according to the first embodiment is mounted on a vehicle;
FIG. 3 is a view showing a front-seat input device and a front-seat display according to the first embodiment;
FIG. 4 is a table showing the type of buttons provided in an image source button operation group according to the first embodiment;
FIG. 5 is a functional block diagram of a control section according to the first embodiment;
FIG. 6 is a view for explaining operations of the display control device according to the first embodiment;
FIG. 7 is a view for explaining operations of the display control device according to the first embodiment;
FIG. 8 is a view for explaining operations of the display control device according to the first embodiment;
FIG. 9 is a view for explaining operations of the display control device according to the first embodiment;
FIG. 10 is a block diagram showing another configuration of the display control device according to the first embodiment;
FIG. 11 is a functional block diagram of a control section according to the second embodiment;
FIG. 12 is a table showing a passing permission table of a signal selector according to the second embodiment;
FIG. 13 is a view for explaining operations of a display control device according to the second embodiment;
FIG. 14 is a view for explaining operations of the display control device according to the second embodiment;
FIG. 15 is a functional block diagram of a control section according to the third embodiment;
FIG. 16 is a table showing a passing permission table of a signal selector according to the third embodiment;
FIG. 17 is a table showing a passing permission table of the signal selector according to the third embodiment;
FIG. 18 is a view for explaining operations of a display control device according to the third embodiment; and
FIG. 19 is a view for explaining operations of the display control device according to the third embodiment.

### DETAILED DESCRIPTION OF THE PREFERRED EMBODIMENTS

Embodiments of the present invention will now be described with reference to the accompanying drawings.

### First Embodiment

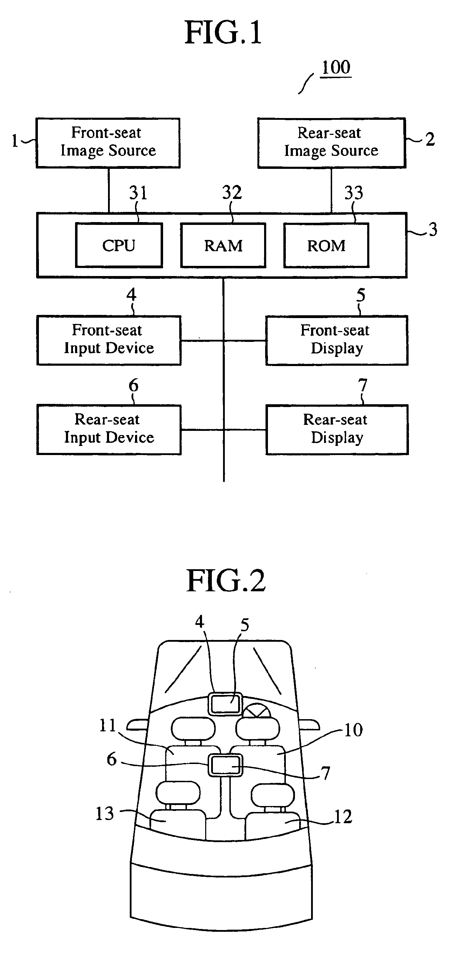

FIG. 1 is a block diagram of an on-vehicle display system using a display control device 100 according to the first embodiment. The on-vehicle display device includes a front-seat image source 1 (display source) ; a rear-seat image source 2 (display source); a control section 3; a front-seat input device 4 (input device) ; a front-seat display 5 (display device); a rear-seat input device 6 (input device); and a rear-seat display 7 (display device). The front-seat image source 1 and the rear-seat image source 2 are navigation systems for doing route guiding, which provides at least either of images displayed on or sound played back by the front-seat display 5 and the rear-seat display 7, respectively, (hereinafter referred to as an image etc.) ; video reproducing equipment such as DVDs; video receiving equipment receiving analog/digital TV broadcasting waves, or the like. Say in addition, the display control system 100 is constituted by the front-seat input device 4, the rear-seat input device 6, and the control section 3.

The control section 3 includes a CPU (central processing unit) 31, a RAM (random access memory) 32, and a ROM (read only memory) 33. The CPU 31 reads a program stored in the ROM 33 in the RAM 32, and executes the program read in the RAM 32 to exercise control of the whole on-vehicle display system, including image display control of the front-seat display 5 and the rear-seat display 7, input control of the front-seat input device 4 and the rear-seat input device 6, and reproduction control of the front-seat image source 1 and the rear-seat image source 2. The front-seat input device 4 is a controller provided for a front-seat occupant such as a driver sitting in the front seat of a vehicle, and used for an operation of the front-seat image source 1 and the rear-seat image source 2. The front-seat display 5 is provided for the front-seat occupant, and displays an image etc. supplied from the front-seat image source 1 or the rear-seat image source 2. The rear-seat input device 6 is a controller provided for a rear-seat occupant such as a passenger sitting in the rear seat of the vehicle, and used for an operation of the front-seat image source 1 and the rear-seat image source 2. The rear-seat display 7 is provided for the rear-seat occupant, and displays an image etc. supplied from the front-seat image source 1 or the rear-seat image source 2.

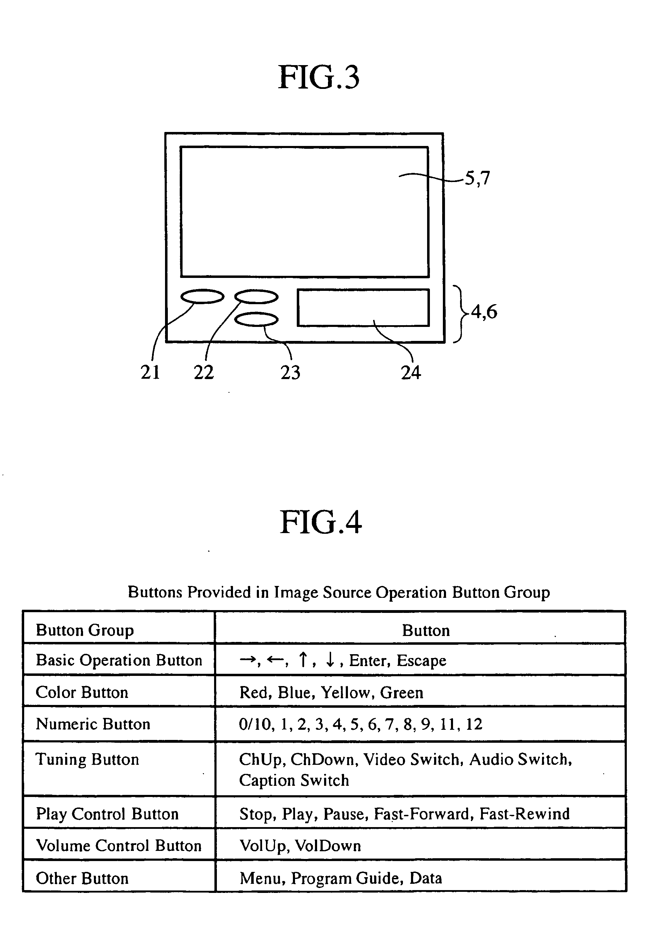

FIG. 2 is a view showing a state where the on-vehicle display system shown in FIG. 1 is mounted on a vehicle. As shown in FIG. 2, the front-seat input device 4 and the front-seat display 5 are disposed between the front seats 10 and 11 of the vehicle so as to provide a front-seat occupant such as a driver for an easy operation and visibility. Likewise, the rear-seat input device 6 and the rear-seat display 7 are disposed between the rear seats 12 and 13 of the vehicle so as to provide a rear-seat occupant for an easy operation and visibility. FIG. 3 is a view showing the front-seat input device 4 and the front-seat display 5. The front-seat display 5 is made of a liquid crystal display or the like. Further, the display includes terminals for an audio speaker and a headphone, which are not shown. The front-seat input device 4 is composed of a display/control object selection button 21 integrally provided with the front-seat display apparatus 5, an other-side operation right selection button (switch) 22, a to-be-operated permission button (switch) 23, and an image source operation button group 24. The display/control object selection button 21 is a selection button for selecting which image from the front-seat image source 1 or the rear-seat image source 2 is displayed on the front-seat display 5. The other-side operation right selection button 22 is a button for selecting whether to permit or not to permit an operation by the front-seat input device 4 to the rear-seat image source 2. The to-be-operated permission button 23 is a button for selecting whether to permit or not to permit an operation by the rear-seat input device 6 to the front-seat image source 1.

The image source operation button group 24 is a button group for operating the front-seat image source 1 or the rear-seat image source 2. FIG. 4 is a table showing the type of buttons provided in the image source operation button group 24. The image source operation button group 24 consists of a basic operation button group including "→," "←," "↑," "↓," "Decision," and "Return" buttons; a color button group including "Red," "Blue," "Yellow," and "Green" buttons; a numeric button group including from "0" button to "12" button; a tuning button group including "ChUp (channel up)," "ChDown (channel down)," "Image Switch," "Voice Switch," and "Caption Switch" buttons; a reproduction control button group including "Stop," "Play," "Pause," "Fast-forward," and "Quick Return" buttons; a volume control button group including "VolUp (volume up) "and "VolDown (volume down) " buttons ; and other button group including "Menu" display, "Program" display, and "Data" display buttons.

In this connection, the rear-seat input device 6 and the rear-seat display 7 have arrangements similar to those of the front-seat input device 4 and the front-seat display 5 shown in FIG. 3, respectively. However, they differ from those of the front-seat input device 4 and the front-seat display 5 in that the other-side operation right selection button 22 provided in the rear-seat input device 6 is responsible for selection of whether to permit or not to permit an operation by the rear-seat input device 6 to the front-seat image source 1, and in that the to-be-operated permission button 23 is responsible for selection of whether to permit or not to permit an operation by the front-seat input device 4 to the rear-seat image source 2. Other arrangements are the same as the front-seat input device 4 and the front-seat display 5, and therefore an explanation of those is omitted for brevity' s sake. Alternatively, the front-seat input device 4 and the rear-seat input device 6 may be touch panels integrally provided at the display screens of the front-seat display 5 and the rear-seat display 7, respectively, or may be remote controllers, etc. Furthermore, the other-side operation right selection button 22 and the to-be-operated permission button 23 may be constituted by switches in place of buttons.

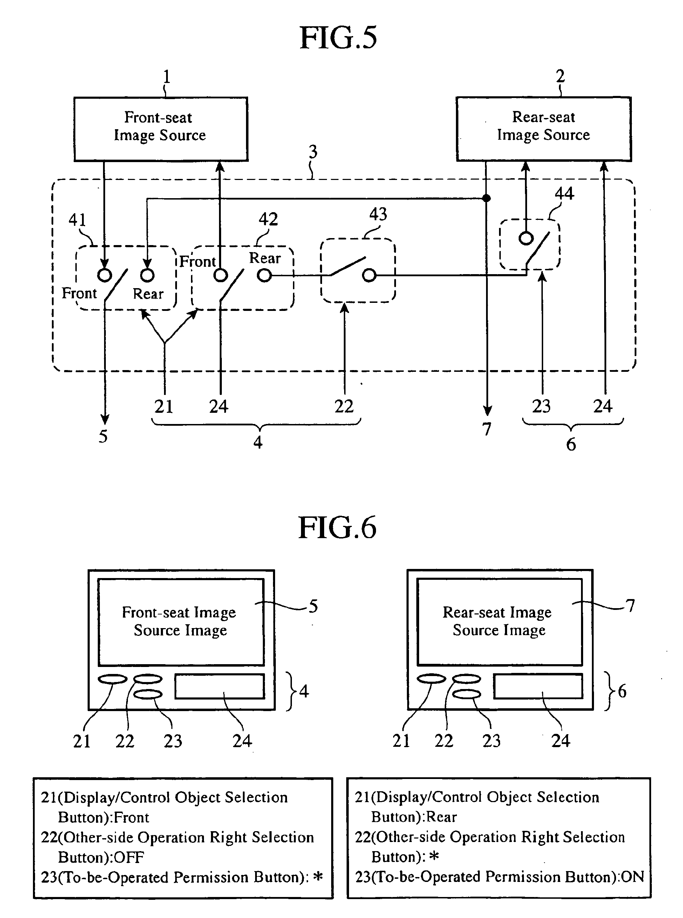

FIG. 5 is a functional block diagram of the control section 3. The control section 3 includes a display object selection switch 41, a control object selection switch 42, an other-side operation right switch 43, and a to-be-operated permission switch 44. The display object selection switch 41 is a toggle switch selecting whether either of an image from the front-seat image source 1 or the rear-seat sources 2 is displayed on the front-seat display 5 through an operation of the display/control object selection button 21 of the front-seat input device 4. The control object selection switch 42 is a toggle switch selecting whether either of the front-seat image source 1 or the control of the rear-seat image source 2 is controlled through an operation of the display/control object selection button 21 of the front-seat input device 4 included in the image source operation button group 24 of the front-seat input device 4. The other-side operation right switch 43 is a switch turning on and off, on the basis of an operation of the other-side operation right selection button 22 of the front-seat input device 4, whether to permit or not to permit an operation to control the rear-seat image source 2 by the image source operation button group 24 of the front-seat input device 4. The to-be-operated permission switch 44 is a switch turning on and off, on the basis of an operation of the to-be-operated permission button 23 of the rear-seat input device 6, whether to permit or not to permit an operation to control the rear-seat image source 2 by the image source operation button group 24 of the front-seat input device 4.

Remark parenthetically, the mechanism of those switches 41 to 44 shown in FIG. 5 can be implemented by reading a program stored in the ROM 33 into the RAM 32 by the CPU 31 shown in FIG, and by executing the program. In that case, it may be arranged that a passing permission flag, realized by software, storing a state of a signal from the image source operation button group 24 of the front-seat input device 4 is reset when the to-be-operated permission switch 44 is "OFF". While the passing permission flag is reset, the control section 3 discards a signal when the signal is received from the image source operation button group 24 of the front-seat input device 4. Further, it is arranged that when the to-be-operated permission switch 44 is "ON", the passing permission flag is rest, a signal from the image source operation button group 24 of the front-seat input device 4 is received, and the signal to the rear-seat image source 2 is sent.

The operation thereof will then be described by reference to FIG. 5 to FIG. 9 below.

FIG. 6 shows a state where the display/control object selection buttons 21 of the front-seat input device 4 and the rear-seat input device 6 are set to "Front" and "Rear," respectively, and the front-seat image source 1 is looked and listened on the front-seat display 5 and the rear-seat image source 2 on the rear-seat display 7, respectively. It is to be appreciated in this explanation that since it is indifferent that the to-be-operated permission button 23 of the front-seat input device 4 and the display/control object selection button 22 of the rear-seat input device 6 are set to "ON" or "OFF", they are illustrated at will.

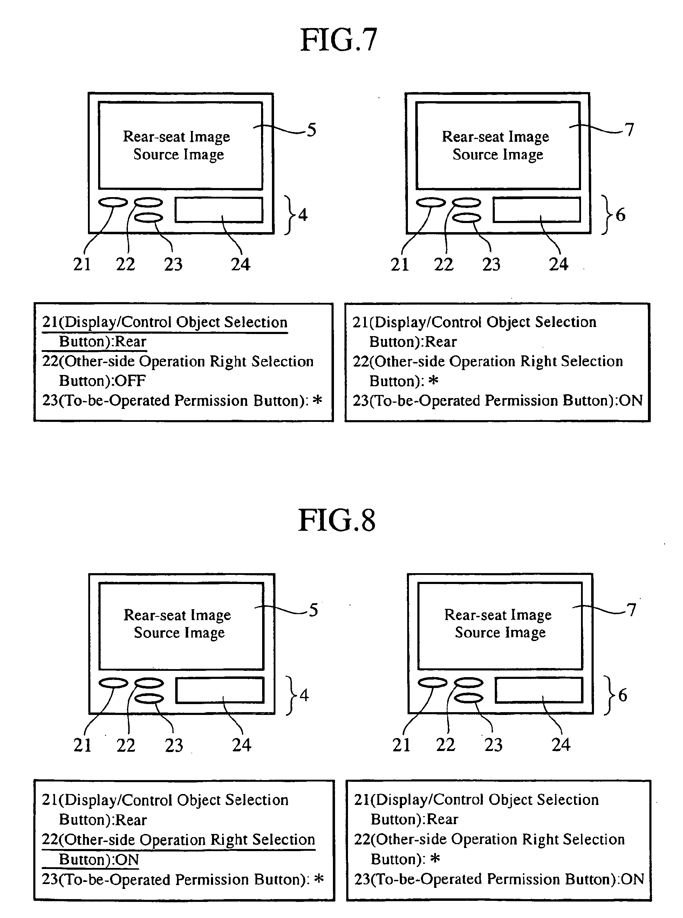

FIG. 7 is a view showing a state where, from the state shown in FIG. 6 to a state in which the display/control object selection button 21 of the front-seat input device 4 is switched to "Rear" through an operation of the display object selection switch 41. When the display/control object selection button 21 is operated, the display object selection switch 41 is switched by the control section 11 from "Front" to "Rear" to display an image from the rear-seat image source 2 on the front-seat display 5. Moreover, at that time, the control object selection switch 42 is also switched by the control section 3 from "Front" to "Rear"; however, the other-side operation right switch 43 remains "OFF". Thus, a signal generated by an operation of the image source operation button group 24 of the front-seat input device 4 is not transmitted to the rear-seat image source 2, and the signal is discarded by the other-side operation right switch 43. Therefore, while a front-seat occupant views an image from the rear-seat image source 2 looked and listened by a rear-seat occupant, there is no need of apprehension that the front-seat occupant might commit an incorrect operation against the rear-seat occupant's own will.

FIG. 8 is a view showing a state where, from the state shown in FIG. 7 to a state in which the other-side operation right switch 43 is switched to "ON" by an operation of the other-side right selection button 22 of the front-seat input device 4. Herein, FIG. 8 assumes a situation where in place of a rear-seat occupant inexperienced in an operation of the rear-seat input device 6, a front-seat occupant operates the front-seat input device 4 to control the rear-seat image source. When the other-side operation right selection button 22 is operated, the other-side operation right switch 43 is switched by the control section 3 from "OFF" to "ON" , thus enabling an operation of the rear-seat image source 2 from the image source operation button group 24 of the front-seat input device 4. Therefore, the front-seat occupant can concurrently view an image from the rear-seat image source 2 looked and listened by the rear-seat occupant, and a desirable operation is allowed to the rear-seat image source 2 by operating the image source operation button group 24 of the front-seat input device 4.

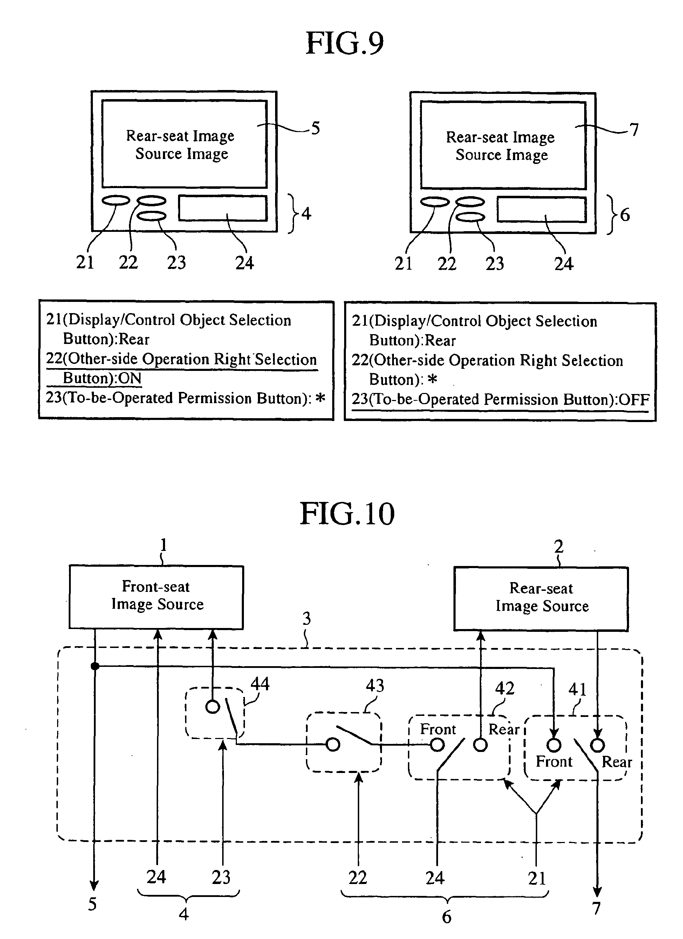

Moreover, in the state shown in FIG. 8, the rear-seat occupant sometimes wants to prohibit an operation by the front-seat occupant so as not to confuse an operation by the rear-seat occupant to the rear-seat image source 2. FIG. 9 is a view showing a state where, with intent to prohibit an operation by the front-seat occupant to the rear-seat image source 2, the rear-seat occupant operates the to-be-operated permission button 23 of the rear-seat input device 6 to switch the to-be-operated permission switch 44 from the state shown in FIG. 7 to "OFF". Furthermore, the front-seat occupant, with intent to operate the rear-seat image source 2, operates the other-side operation right selection button 22 of the front-seat input device 4 to switch the other-side operation right switch 43 to "ON". When the to-be-operated permission button 23 is operated, the to-be-operated permission switch 44 is switched by the control section 3 from "ON" to "OFF". Moreover, when the other-side operation right selection button 22 is operated, the other-side operation right switch 43 is switched by the control section 3 from "OFF" to "ON." Here, even if the front-seat occupant operates the image source operation button group 24 of the front-seat input device 4 with the intention of operating the rear-seat image source 2, since the to-be-operated permission switch 44 is set to "OFF", a signal generated by an operation of the image source operation button group 24 of the front-seat input device 4 is discarded by the to-be-operated permission switch 44, and due to this, the signal is not transmitted to the rear-seat image source 2. Thus, the rear-seat occupant can prevent an undesirable operation by the front-seat occupant to the rear-seat image source 2.

As mentioned above, the display control system 100 according to the first embodiment is arranged such that the other-side operation right selection button 22 is provided in the front-seat input device 4, and that an operation to the rear-seat image source 2 by the image source operation button group 24 of the front-seat input device 4 is permitted on the basis of the operation of the operation right selection button 22. Therefore, the front-seat occupant is given permission to operate the rear-seat image source 2 only when the front-seat occupant has the intention of assisting the rear-seat occupant in carrying out an operation by the rear-seat occupant, and so there gives rise to no confusion of an operation between the front-seat occupant and the rear-seat occupant. In contrast, when the front-seat occupant does not have the intention of assisting the front-seat occupant in performing an operation, an incorrect operation against the rear-seat occupant's own will be able to prevent from being committed. Further, since it is arranged that the rear-seat input device 6 is provided with the to-be-operated permission button 23, and that permission to control the rear-seat image source 2 by the image source operation button group 24 of the front-seat input device 4 is given on the basis of an operation of the to-be-operated permission button 23, such arrangement permits the front-seat occupant to operate the rear-seat image source 2 only when the front-seat occupant signifies his/her intention to give operation assistance of the rear-seat occupant. Hence, no confusion of the operation results in between the front-seat occupant and the rear-seat occupant. Besides, when the rear-seat occupant does not ask the front-seat occupant for help of operation, an operation by the front-seat occupant can be prohibited, which prevents an incorrect operation against the rear-seat occupant's own will.

In passing, in the first embodiment, the embodiment is explained where the front-seat input device 4 is provided with the other-side operation right selection button 22, the rear-seat input device 6 is provided with the to-be-operated permission button 23, and the control section 3 includes the other-side operation right switch 43 and the to-be-operated permission switch 44. Instead, another arrangement may be taken where the front-seat input device 4 is provided with the other-side operation right selection button 22 and the control section 3 is provided with the other-side operation right switch 43, or still another arrangement may be taken where the rear-seat input device 6 is provided with the to-be-operated permission button 23 and the control section 3 is provided with the to-be-operated permission switch 44. Alternatively, the other-side operation right switch 43 and to-be-operated permission switch 44 included in the control section 3 of the display control system 100 according to the first embodiment may be replaced with physical switches. Further, in the display control system 100 according to the first embodiment, the explanation is given of the embodiment where an operation of the rear-seat image source 2 by the front-seat image source 1 is permitted on the basis of an operation of the other-side operation right selection button 22 provided in the front-seat input device 4, and an operation of the rear-seat image source 2 by the front-seat image source 1 is permitted on the basis of an operation of the to-be-operated permission button 23 provided in the rear-seat input device 6. However, not limited thereto, it may be arranged that, as shown in FIG. 10, the rear-seat input device 6 is provided with the other-side operation right selection button 22, and that an operation to the front-seat image source 1 is permitted on the basis of an operation of the other-side operation right selection button 22. Besides, it may be arranged that the front-seat input device 4 is provided with the to-be-operated permission button 23, and that an operation to the front-seat image source 1 by the rear-seat input device 6 is permitted on the basis of an operation of the to-be-operated permission button 23.

In this case, the front-seat image source 1 can be operated only when the rear-seat occupant has the intention of assisting the front-seat occupant in doing an operation, and thus no confusion of an operation is given rise to between the front-seat occupant and the rear-seat occupant. Conversely, when the rear-seat occupant does not have the intention of assisting the front-seat occupant in doing an operation, perpetration of an incorrect operation against the front-seat occupant's own will can be prevented. Further, only when the front-seat occupant intimates his/her intention to call in the aide of operation assistance by the rear-seat occupant, permission to operate the front-seat image source 1 by the rear-seat occupant is given, which results in no confusion of an operation between the front-seat occupant and the rear-seat occupant. Furthermore, when the front-seat occupant does not ask the rear-seat occupant for help of operation, an operation by the rear-seat occupant can be prohibited, thereby preventing an incorrect operation against the front-seat occupant's own will.

### Second Embodiment

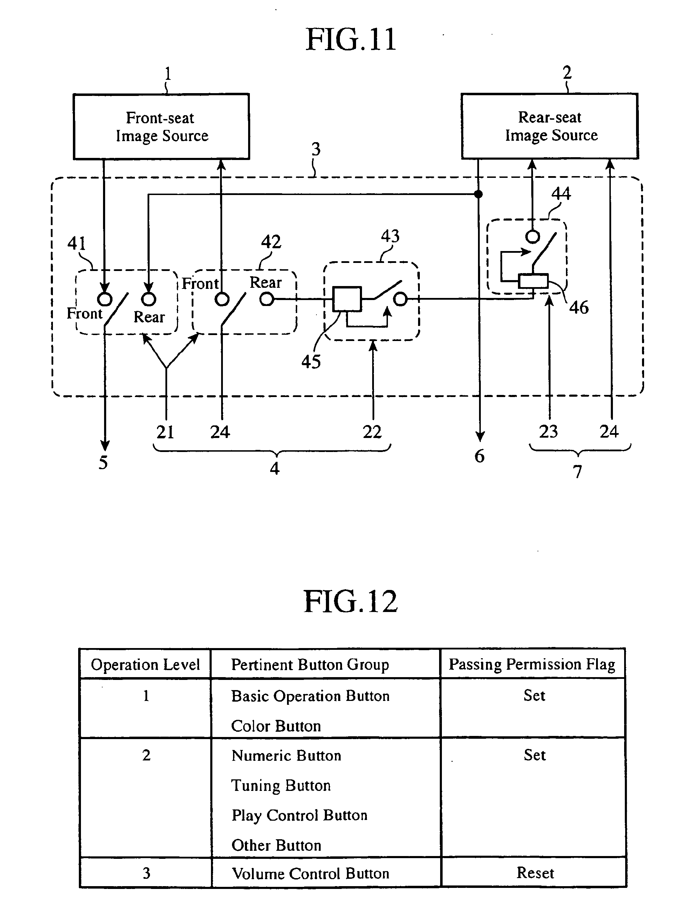

FIG. 11 is a functional block diagram of the control section 3 included in a display control system 200 according to the second embodiment. While in the first embodiment, the explanation is given of the embodiment where the arrangement of setting whether to permit or not to permit every operation by the image source operation button group 24, in the second embodiment, a description will be given of an embodiment where an arrangement of setting whether to permit or not to permit an operation by the image source operation button group 24 depending on what operation by the button group is to be done. It should be noted that the display control system according to the second embodiment differs from the display control device 100 according to the first embodiment in that the other-side operation right switch 43 and the to-be-operated permission switch 44 include a signal selector 45 and a signal selector 46, respectively for determining whether or not an operation is permitted depending upon what operation is to be done by the image source operation button group 24. The other arrangements are the same as the display control system 100 according to the first embodiment, and therefore an explanation of those is omitted for brevity's sake.

FIG. 12 is a table showing a passing permission table that is table data internally provided in the signal selectors 45, 46. In the passing permission table, the buttons of the image source operation button group 24 are divided into three operation levels, and passing permission flags are defined for every operation level. Here, when a video receiving equipment of digital TV broadcasting is selected as the front-seat image source 1 or the rear-seat image source 2, the basic operation button group and color button group assigned to an operation level 1; the numeric button group, tuning button group, reproduction control button group and other button groups to an operation level 2; and the volume control button group to an operation level 3, respectively as shown in FIG. 4. Hereupon, it is needless to say that this assignment is instantiated by way example, and may be properly changed.

The states of the passing permission flags of the operation levels 1 to 3 of the passing permission table internally included in the other-side operation right switch 43, shown in FIG. 12 are cyclicly changed from the following state 0 to state 3 every time the other-side operation right selection button 22 of the front-seat input device 4 is operated. Here, "reset" means a state where a received signal from the image source operation button group 24 is discarded. Additionally, "set" means a state where a received signal from the image source operation button group 24 is passed.
State 0: All levels are reset.
State 1: Level 1 is set, and levels 2 and 3 are reset.
State 2: Levels 1 and 2 are set, and level 3 is reset.
State 3: All levels are set.

The signal selector 45 included in the to-be-operated permission switch 44, when a signal is received from the image source operation button group 24 judges whether to which operation level the signal input from the image source operation button group 24 pertains, referring to the passing permission table shown in FIG. 12, and when the passing permission flag corresponding to the relevant operation level is in the set state, the other-side operation right switch 43 is switched to "ON" to get the signal to pass to the to-be-operated permission switch 44. Conversely, when the passing permission flag corresponding to the pertinent operation level is in the reset state, the to-be-operated permission switch 44 is switched to "OFF" to discard the signal.

Moreover, the state of the passing permission flag of each of the operation levels 1 to 3 of the passing permission table internally included in the to-be-operated permission switch 44, shown in FIG. 12, is cyclicly changed from the following state 0 to state 3 every time the other-side operation right selection button 22 of the rear-seat input device 6 is operated.
State 0: All levels are reset.
State 1: Level 1 is set, and levels 2 and 3 are reset.
State 2: Levels 1 and 2 are set, and level 3 is reset.
State 3: All levels are set.

The signal selector 46 of the to-be-operated permission switch 44, when a signal is received from the image source operation button group 24 judges whether to which operation the signal input from the image source operation button group 24 belongs, referring to the passing permission table shown in FIG. 12, and when the passing permission flag corresponding to the pertinent operation level is in the set state, the to-be-operated permission switch 44 is switched to "ON" to get the signal to pass to the rear-seat image source 2. Conversely, when the passing permission flag corresponding to the pertinent operation level is in the reset state, the to-be-operated permission switch 44 is switched to "OFF" to discard the signal.

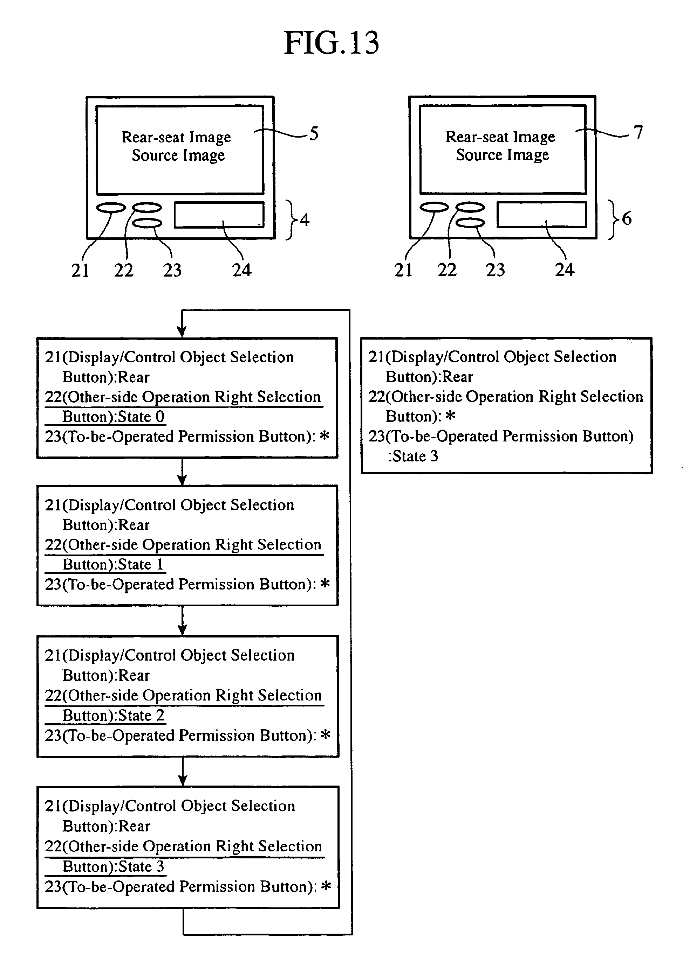

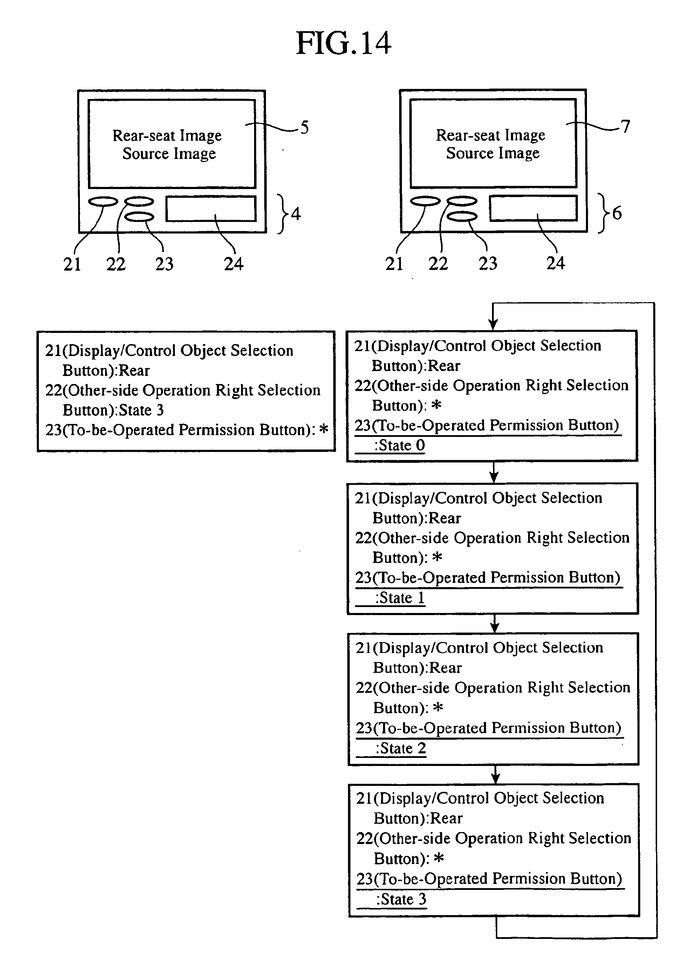

The operation thereof will then be described by reference to FIG. 13 and FIG. 14.

FIG. 13 shows a state where the display/control object selection buttons 21 provided in the front-seat input device 4 and the rear-seat input device 6, respectively, are set to "Rear," and an image from the rear-seat image source 2 is concurrently displayed on the front-seat display 5 and the rear-seat display 7. Moreover, an explanation will be given assuming that a state of the passing permission flag of the passing permission table internally included in the to-be-operated permission switch 44 is in the state 3.

If the state of the passing permission flag of the passing permission table included in the signal selector 46 of the to-be-operated permission switch 44 is in the state 3, as described above, the to-be-operated permission switch 44 causes all input signals to pass to the rear-seat image source 2. Otherwise, if the state of the passing permission flag of the passing permission table included in the signal selector 45 of the other-side operation right switch 43 is in the state 0, the other-side operation right switch 43 discards all input signals. For this reason, an operation of the image source operation button group 24 of the front-seat input device 4 is not transmitted to the rear-seat image source 2. While the front-seat occupant is concurrently viewed an image from the rear-seat image source 2 looked and listened by the rear-seat occupant, there is no need of apprehension that the front-seat occupant might commit an incorrect operation to the rear-seat image source 2 against the rear-seat occupant's own will.

Subsequently, when the front-seat occupant operates the other-side operation right selection button 22 of the front-seat input device 4, the control section 3 changes the state of the passing permission flag of the passing permission table included in the signal selector 45 of the other-side operation right switch 43 from the state 0 to the state 1. At that time, the other-side operation right switch 43 gets only the input signal of the button for a data broadcasting screen operation pertinent to the operation level 1 to pass to the to-be-operated permission switch 44. Therefore, the front-seat occupant is permitted to operate only the data broadcasting screen to the rear-seat image source 2; however, there is no need of apprehension that the front-seat occupant might perpetrate an incorrect operation e.g. such as volume control against the rear-seat occupant's own will. Furthermore, when the front-seat occupant further operates twice the other-side operation right selection button 22 of the front-seat input device 4, the control section 3 changes the state of the passing permission flag of the passing permission table included in the signal selector 45 of the other-side operation right switch 43 from the state 1 to the state 3. At that moment, the other-side operation right switch 43 causes all input signals to pass to the to-be-operated permission switch 44. Therefore, the front-seat occupant is allowed to perform all the operations including volume control to the rear-seat image source 2.

FIG. 14 shows a state where the display/control object selection buttons 21 provided in the front-seat input device 4 and the rear-seat input device 6 are respectively set to "Rear," and an image etc. from the rear-seat image source 2 is coincidentally looked and listened on the front-seat display 5 and the rear-seat display 7. Further, an explanation will be given on the assumption that the state of the passing permission flag of the passing permission table internally included in the signal selector 45 of the other-side operation right switch 43 is in the state 3.

As mentioned above, if the state of the passing permission flag of the passing permission table included in the signal selector 45 of the other-side operation right switch 43 is in the state 3, the signal selector 45 of the other-side operation right switch 43 causes all input signals to pass to the to-be-operated permission switch 44. Inversely, if the state of the passing permission flag of the passing permission table included in the signal selector 46 of the to-be-operated permission switch 44 is in the state 0, the to-be-operated permission switch 44 discards all the input signals. Hence, an operation of the image source operation button group 24 of the front-seat input device 4 cannot be transmitted to the rear-seat image source 2. Thus, the rear-seat occupant can deny all the operations by the front-seat occupant to the rear-seat image source 2.

Then, when a rear-seat occupant operates twice the to-be-operated permission button 23 of the rear-seat input device 6, the control section 3 changes the state of the passing permission flag of the passing permission table included in the signal selector 46 of the to-be-operated permission switch 44 from the state 0 to the state 2. On that occasion, the to-be-operated permission switch 44 gets only the input signal of the button pertinent to the operation level 1 and the operation level 2 to pass, and discards the input signal of the volume control button group pertinent to the operation level 3. Consequently, the rear-seat occupant can prohibit only the volume control among the operations available from the front seat to the rear-seat image source 2, and can permit other operations except that. More precisely, this enables receiving operation assistance in performing other operations from the front-seat occupant while avoiding taking the liberty of changing from the front-seat a sound volume in the rear seat that cannot be perceived from the front seat. Moreover, when the rear-seat occupant continues to operate the to-be-operated permission button 23 of the rear-seat input device 6, the control section 3 changes the state of the passing permission flag of the passing permission table included in the signal selector 46 of the to-be-operated permission switch 44 from the state 2 to the state 3. In that case, the rear-seat occupant can give permission to perform every operation to the rear-seat image source 2 from the front seat.

As stated above, according to the display control device 200 of the second embodiment, the other-side operation right switch 43 includes the passing permission table shown in FIG. 12, and is provided with the signal selector 45 judging whether to permit an operation of the image source operation button group 24 on the basis of the passing permission table. By virtue of this, a front-seat occupant can have access to the rear-seat image source 2 for operation thereof when the front-seat occupant has the intention of assisting an operation of the rear-seat occupant, only for specific operations to the rear-seat image source 2. This prevents other incorrect operations against the rear-seat occupant's own will. Further, the to-be-operated permission switch 44 includes the passing permission table shown in FIG. 12, and is provided with the signal selector 46 judging whether to permit an operation of the image source operation button group 24 on the basis of the passing permission table. By grace of this, when the rear-seat occupant has the intention of being given operation assistance from the front-seat occupant, only for specific operations to the rear-seat image source, permission is granted to an operation by the front-seat occupant, which prohibits undesirable operations other than that by the front-seat occupant.

It should be appreciated that, also in the display control device 200 according to the second embodiment, as with the display control system 100 according to the first embodiment, the other-side operation right switch 43 and the to-be-operated permission switch 44 may be replaced with physical switches. Alternatively, as shown in. FIG. 10, switching of whether to permit or not to permit an operation to the front-seat image source 1 may be done by the other-side operation right selection button 22 provided in the rear-seat input device 6, and switching of whether to permit or not to permit an operation to the front-seat image source 1 from the rear seat may be done by the to-be-operated permission button 23 provided in the front-seat input device 4. Other effects thereof are similar to those of the first embodiment.

### Third Embodiment

The assignment of a plurality of functions to a button of an input device according to a scene of operations is prevalent. For example, in a video receiving equipment of digital TV broadcasting, a numeric button usually acts as a tuning function of a channel to be looked and listened. However, when a data broadcasting screen displays an item prompting a user to enter a zip code, the button acts as a function of number input on the data broadcasting screen. In the third embodiment, a description will be made of an embodiment where allocation of plural functions to each of switches is considered.

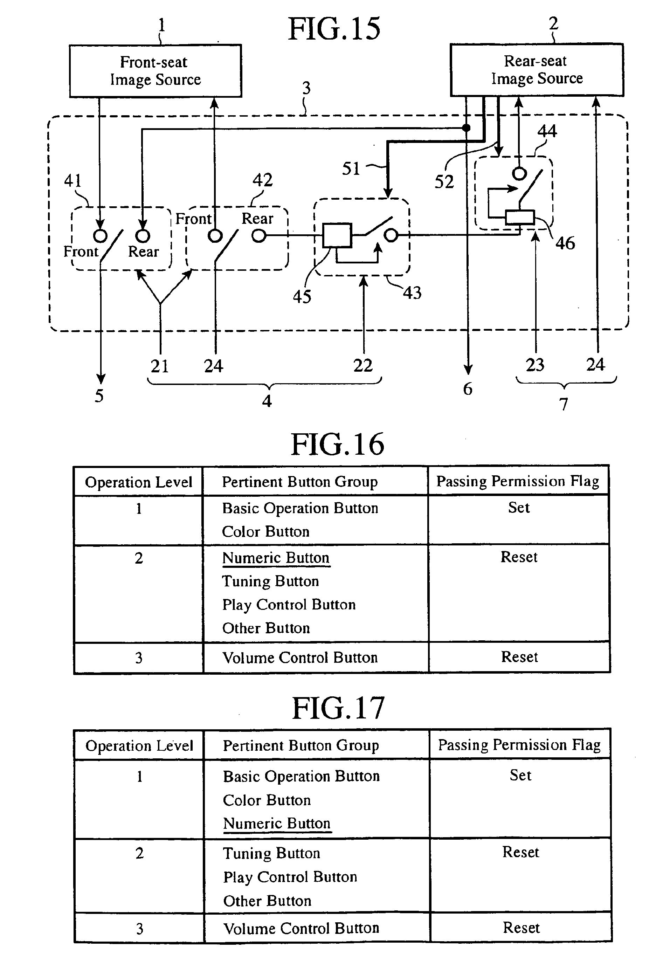

FIG. 15 is a functional block diagram of the control section 3 included in a display control device 300 according to the third embodiment. As compared with FIG. 11, the control device differs from that shown in FIG. 11 in that the other-side operation right switch 43 inputs a level classification-change request signal 51 and the to-be-operated permission switch 44 inputs a level classification-change request signal 52, respectively. The other arrangements of the display control system are the same as the display control device 200 according to the second embodiment, and therefore an explanation of those is omitted for brevity's sake.

The level classification-change request signal 51 shown in FIG. 15 is a signal fed from the rear-seat image source 2 to be controlled to the other-side operation right switch 43, which is fed to the other-side operation right switch 43 when a screen prompting a rear-seat occupant to input is displayed on the rear-seat image source 2. To be more exact, where the passing permission table included in the signal selector 45 of the other-side operation right switch 43 is in the state shown in FIG. 16, the rear-seat image source 2 is a video receiving equipment of digital TV broadcasting, and further a data broadcasting screen begins to display an item prompting a user to input a zip code, the level classification-change request signal 51 indicative of a change of the numeric button group from operation level 2 to operation level 1 is fed to the other-side operation right switch 43.

When the level classification-change request signal 51 is received by the other-side operation right switch 43, the other-side operation right switch 43 changes the passing permission table included in the signal selector 45 to the state shown in FIG. 17. Moreover, when the display of the item on the data broadcasting screen prompting a user to input a zip code ends, the level classification-change request signal 51 indicative of a change of the numeric button group from the level 1 to the level 2 is fed from the rear-seat image source 2 to the other-side operation right switch 43, and when the level classification-change request signal 51 is received by the other-side operation right switch 43, the other-side operation right switch 43 changes the passing permission table included in the signal selector 45 to the state shown in FIG. 16.

The level classification-change request signal 52 is a signal fed from the rear-seat image source 2 to be controlled to the to-be-operated permission switch 44, which is fed to the to-be-operated permission switch 44 when a screen prompting a rear-seat occupant to input is displayed in the rear-seat image source 2. To be concrete, when the passing permission table included in the signal selector 46 of the to-be-operated permission switch 44 is in the state shown in FIG. 16, the rear-seat image source 2 is a video receiving equipment of digital TV broadcasting, and further a data broadcasting screen starts to display an item prompting a user to input a zip code, the level classification-change request signal 52 representative of a change of the numeric button group from the operation level 2 to the operation level 1 is fed to the to-be-operated permission switch 44.

When the level classification-change request signal 52 is received by the to-be-operated permission switch 44, the to-be-operated permission switch 44 changes the passing permission table included in the signal selector 46 to the state shown in FIG. 17. Besides, the display of the item on the data broadcasting screen prompting a user to input a zip code ends, the level classification-change request signal 52 indicative of a change of the numeric button group from the level 1 to the level 2 is fed from the rear-seat image source 2 to the to-be-operated permission switch 44, and when the level classification-change request signal 52 is received by the to-be-operated permission switch 44, the to-be-operated permission switch 44 changes the passing permission table included in the signal selector 46 to the state shown in FIG. 16.

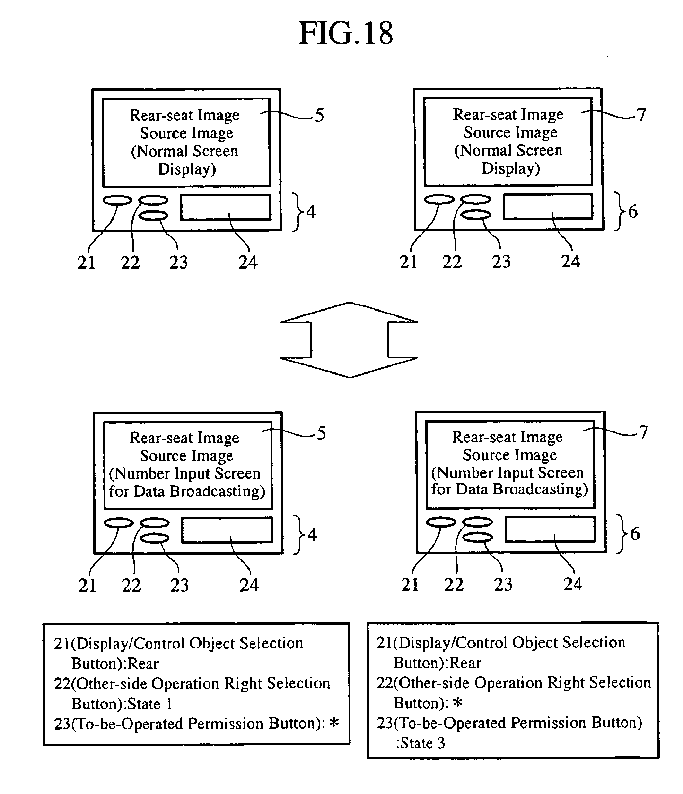

The operation thereof will now be described by reference to FIG. 18 to FIG.19.

FIG. 18 shows a state where the display/control object selection buttons 21 provided in the front-seat input device 4 and the rear-seat input device 6 are respectively set to "Rear," and an image from the rear-seat image source 2 is simultaneously looked and listened on the front-seat display 5 and the rear-seat display 7. Moreover, in FIG. 18, because the passing permission flag of the passing permission table internally included in the signal selector 46 of the to-be-operated permission switch 44 is in the state 3, and the passing permission flag of the passing permission table internally included in the signal selector 45 of the other-side operation right switch 43 is in the state 1, the to-be-operated permission switch 44 gets all input signals to pass, and the other-side operation right switch 43 causes only an input signal of the data broadcasting screen operating button pertinent to the operation level 1 to pass.

Here, when the rear-seat image source 2 that is a video receiving equipment of digital TV broadcasting displays a normal screen, the passing permission table included in the signal selector 45 of the other-side operation right switch 43 is in the state shown in FIG. 16. At that time, since the numeric button group is pertinent to the operation level 2, a signal is discarded by the other-side operation right switch 43. Therefore, even if a front-seat occupant attempts to operate the numeric button group of the image source operation button group 24 of the front-seat input device 4, tuning of the rear-seat image source 2 cannot be accomplished.

However, when the rear-seat image source 2 displays a data broadcasting screen prompting a user to input a zip code, etc., the level classification-change request signal 51 is fed from the rear-seat image source 2 to the other-side operation right switch 43, and on the basis of the level classification-change request signal 51, the passing permission table included in the signal selector 45 of the other-side operation right switch 43 comes to the state shown in FIG. 17. Thus, the numeric button group gets to the operation level 1, and a signal can pass the other-side operation right switch 43. Consequently, an operation of the numeric button in the image source operation button group 24 of the front-seat input device 4 by the front-seat occupant enables an input of number to the rear-seat image source 2. As mentioned above, even if the function of the numeric button is changed depending on a display scene of the rear-seat image source 2, a front-seat occupant is permitted to perform an operation to the rear-seat image source 2, only for the data broadcasting screen.

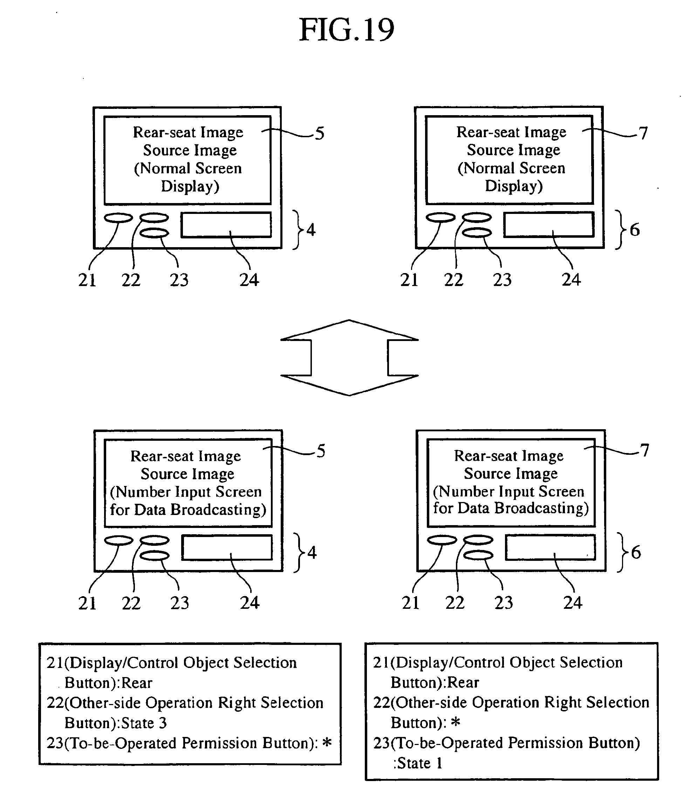

FIG. 19 shows a state where the display/control object selection buttons 21 provided in the front-seat input device 4 and the rear-seat input device 6 are respectively set to "Rear," and an image from the rear-seat image source 2 is coincidentally looked and listened on the front-seat display 5 and the rear-seat display 7. Furthermore, in FIG. 19 , since the passing permission flag of the passing permission table internally included in the signal selector 45 of the other-side operation right switch 43 is in the state 3, and the passing permission flag of the passing permission table internally included in the signal selector 46 of the to-be-operated permission switch 44 is in the state 1, the other-side operation right switch 43 causes all input signals to pass, and the to-be-operated permission switch 44 gets only the input signal by the data broadcasting screen operating button pertinent to the operation level 1 to pass.

Here, when the rear-seat image source 2 that is a video receiving equipment of digital TV broadcasting displays a normal screen, since the passing permission table included in the signal selector 46 of the to-be-operated permission switch 44 is in the state shown in FIG. 16, and the numeric button group is pertinent to the operation level 2, a signal is discarded by the to-be-operated permission switch 44. Therefore, even if the front-seat occupant tries to operate the numeric button group of the image source operation button group 24 of the front-seat input device 4, tuning of the rear-seat image source 2 cannot be attained.

However, while the rear-seat image source 2 displays a data broadcasting screen prompting a user to input a zip code etc. the level classification-change request signal 52 is fed from the rear-seat image source 2 to the to-be-operated permission switch 44, and on the basis of the level classification-change request signal 52, the passing permission table included in the signal selector 46 of the to-be-operated permission switch 44 gets to the state shown in FIG. 17. Accordingly, the numeric button group comes to the operation level 1, and an operation signal pertinent to the number button group can pass the to-be-operated permission switch 44. Consequently, the operation of the numeric button in the image source operation button group 24 of the front-seat input device 4 by a front-seat occupant enables a number input to the rear-seat image source 2. As described above, even if the function of the numeric button is changed depending on a scene displayed on the rear-seat image source 2, a front-seat occupant is permitted to operate the rear-seat image source 2, only for the data broadcasting screen.

As mentioned above, since in the display control device 300 according to the third embodiment, it is arranged such that the state of the passing permission table included in the signal selector 45 is changed by a level classification-change request signal 51 fed from the rear-seat image source 2 to be controlled to the other-side operation right switch 43, even if the other-side operation right switch 43 is set in a way not to permit an operation by the front-seat occupant, when the function of an input signal is changed depending on a displayed screen, an operation is allowed to the rear-seat image source 2, only for a specific operation. Furthermore, since it is arranged such that the state of the passing permission table included in the signal selector 46 is changed by the level classification-change request signal 52 fed from the rear-seat image source 2 to be controlled to the to-be-operated permission switch 44, even if the to-be-operated permission switch 44 is set in a manner not to permit an operation by the front-seat-occupant, when the function of an input signal is changed depending on a displayed screen, an operation is permitted to the rear-seat image source 2, only for a specific operation.

It should be noted that in the display control device 300 according to the third embodiment, as with the display control device 100 according to the first embodiment, the other-side operation right switch 43 and the to-be-operated permission switch 44 may be replaced with physical switches. Besides, as shown in FIG. 10, switching of whether to permit or not to permit an operation to the front-seat image source 1 may be done by the other-side operation right selection button 22 provided in the rear-seat input device 6, and switching of whether to permit or not to permit an operation to the front-seat image source 1 from the rear seat may be done by the to-be-operated permission button 23 provided in the front-seat input device 4. Other effects thereof are similar to those of the second embodiment.

## Claims

1. A display control device (100) in which a first display source (1) is displayed on a first display (5) on the basis of an operational instruction of a first input device (4), and a second display source (2) is concurrently displayed on a second display (7) on the basis of an operational instruction of a second input device (6),
wherein a switch (22,23) is provided for selecting whether to permit or not to permit an operation when the second display source (2) is displayed on the first display (5) and/or on the second display (7) by the operational instruction of the first input device (9), and only when the switch is set to an operable condition, display control of the second display source (2) on the first display (5) and/or on the second display (7) is done by the operational instruction of the first input device (4),
**characterized in that** a table data is provided which defines an item of an operational instruction of whether to permit or not to permit an operation of displaying the second display source (2) on the first display (5) and/or on the second display (7) by the operational instruction of the first input device, and wherein the switch selects whether to permit or not to permit the operation by reference to the table data.

2. The display control device according to Claim 1, wherein the first input device (4) and the first display (5) are provided on a front seat (10,11) of a vehicle, and the second input device (6) and the second display (7) are provided on a rear seat (12,13) of the vehicle, respectively.

3. The display control device according to Claim 1 wherein the first input device (4) and the first display (5) are provided on a rear seat (12,13) of a vehicle, and the second input device (6) and the second display (7) are provided on a front seat (10,11) of the vehicle, respectively.

4. The display control device according to Claim 1, wherein the switch (22,23) is provided at least in either of the first input device (4) and the second input device (6).

5. The display control device according to Claim 1, wherein the table data is changed depending upon what image is displayed on the second display (7).

## Patentansprüche

1. Ein Displaysteuergerät (100), in dem eine erste Anzeigequelle (1) aufgrund einer Arbeitsanweisung eines ersten Eingabegerätes (4) auf einem ersten Display (5) dargestellt wird, und eine zweite Anzeigequelle (2) aufgrund einer Arbeitsanweisung eines zweiten Eingabegerätes (6) gleichzeitig auf einem zweiten Display (7) dargestellt wird,
wobei ein Schalter (22, 23) vorgesehen ist zum Auswählen, ob ein Arbeitsschritt erlaubt wird oder nicht erlaubt wird, wenn die zweite Anzeigequelle (2) durch die Arbeitsanweisung des ersten Eingabegerätes (4) auf dem ersten Display (5) und/oder auf dem zweiten Display (7) dargestellt wird, und nur wenn der Schalter in eine betriebsfähige Stellung eingestellt ist, erfolgt die Displaysteuerung der zweiten Anzeigequelle (2) auf dem ersten Display (5) und/oder auf dem zweiten Display (7) durch die Arbeitsanweisung des ersten Eingabegerätes (4),
**dadurch gekennzeichnet, dass** ein Tabellenwert vorliegt, der ein Element einer Arbeitsanweisung bezüglich dessen definiert, ob ein Arbeitsschritt zum Darstellen der zweiten Anzeigequelle (2) auf dem ersten Display (5) und/oder auf dem zweiten Display (7) durch die Arbeitsanweisung des ersten Eingabegerätes erlaubt wird oder nicht erlaubt wird, und wobei der Schalter unter Bezug auf den Tabellenwert auswählt, ob der Arbeitsschritt erlaubt wird oder nicht erlaubt wird.

2. Das Displaysteuergerät nach Anspruch 1, wobei das erste Eingabegerät (4) und das erste Display (5) auf einem Vordersitz (10, 11) eines Fahrzeugs vorgesehen sind, und das zweite Eingabegerät (6) und das zweite Display (7) auf einem Rücksitz (12, 13) eines Fahrzeugs vorgesehen sind.

3. Das Displaysteuergerät nach Anspruch 1, wobei das erste Eingabegerät (4) und das erste Display (5) auf einem Rücksitz (12, 13) eines Fahrzeugs vorgesehen sind, und das zweite Eingabegerät (6) und das zweite Display (7) auf einem Vordersitz (10, 11) eines Fahrzeugs vorgesehen sind.

4. Das Displaysteuergerät nach Anspruch 1, wobei der Schalter (22, 23) in mindestens einem der Geräte erstes Eingabegerät (4) und zweites Eingabegerät (6) vorgesehen ist.

5. Das Displaysteuergerät nach Anspruch 1, wobei der Tabellenwert abhängig davon geändert wird, welches Bild auf dem zweiten Display (7) dargestellt wird.

## Revendications

1. Dispositif de commande d'affichage (100) dans lequel une première source d'affichage (1) est affichée sur un premier écran d'affichage (5) sur la base d'une instruction opérationnelle d'un premier dispositif d'entrée (4), et une seconde source d'affichage (2) est affichée en même temps sur un second écran affichage (7) sur la base d'une instruction opérationnelle d'un second dispositif d'entrée (6),
dans lequel un commutateur (22, 23) est prévu pour choisir s'il faut permettre ou non une opération lorsque la seconde source d'affichage (2) est affichée sur le premier écran d'affichage (5) et/ou sur le second écran d'affichage (7) par l'instruction opérationnelle du premier dispositif d'entrée (4), et uniquement lorsque le commutateur est réglé à une condition de fonctionnement, une commande d'affichage de la seconde source d'affichage (2) sur le premier écran d'affichage (5) et/ou sur le second écran d'affichage (7) est effectuée par l'instruction opérationnelle du premier dispositif d'entrée (4),
**caractérisé en ce que** des données de tableau sont fournies, lesquelles définissent un article d'une instruction opérationnelle visant à permettre ou non une opération d'affichage de la seconde source d'affichage (2) sur le premier écran d'affichage (5) et/ou sur le second écran d'affichage (7) par l'instruction opérationnelle du premier dispositif d'entrée et dans lequel le commutateur choisit de permettre ou non l'opération en référence aux données du tableau.

2. Dispositif de commande d'affichage selon la revendication 1, dans lequel le premier dispositif d'entrée (4) et le premier écran d'affichage (5) sont aménagés sur un siège avant (10, 11) d'un véhicule, et le second dispositif d'entrée (6) et le second écran d'affichage (7) sont aménagés sur un siège arrière (12, 13) du véhicule, respectivement.

3. Dispositif de commande d'affichage selon la revendication 1, dans lequel le premier dispositif d'entrée (4) et le premier écran d'affichage (5) sont aménagés sur un siège arrière (10, 11) d'un véhicule, et le second dispositif
d'entrée (6) et le second écran d'affichage (7) sont aménagés sur un siège avant (10, 11) du véhicule, respectivement.

4. Dispositif de commande d'affichage selon la revendication 1, dans lequel le commutateur (22, 23) est aménagé au moins dans l'un ou l'autre du premier dispositif d'entrée (4) et du second dispositif d'entrée (6).

5. Dispositif de commande d'affichage selon la revendication 1, dans lequel les données du tableau sont modifiées en fonction de l'image qui est affichée sur le second écran d'affichage (7).
